# EUROPEAN PATENT SPECIFICATION

(11) **EP 0 453 526 B1**
(45) Date of publication and mention of the grant of the patent: **07.02.1996**
(21) Application number: 90915274.6
(22) Date of filing: 19.10.1990
(51) Int. Cl.: B64D 47/08, G03B 15/00

(54) **PHOTO DEVICE**
PHOTOVORRICHTUNG
APPAREIL PHOTOGRAPHIQUE

(30) Priority: 14.11.1989 CA 2002974
(43) Date of publication of application: 30.10.1991
(73) Proprietor: Air Supply Services, Salem, Illinois 62881 (US)
(72) Inventor: Watson, Ronald, Orangeville, Ontario L9W 4B8 (CA)
(74) Representative: Butler, Michael John
(86) International application number: CA9000359
(87) International publication number: WO9107317

(56) References cited:
- DE-C- 196 139
- FR-A- 2 504 490
- GB-A- 973 378
- Patent Abstracts of Japan, vol. 8, no. 286 (P-324)(1723), 27 December 1984; & JP-A-59149341 (ASAHI SHIYOUKAI K.K.) 27 August 1984

## Description

This invention relates to an aerial viewing device and particularly relates to an aerial still camera suspended from a helium balloon which includes a video camera with a display for displaying a view capable of being photographed by the still camera; and includes means to transmit or record the video image.

Aerial photography basically relates to the art and science of photographing objects from an elevated position.

Aerial photography is a useful tool in photographing objects or terrain from an elevated position and has been used by engineers and scientists to map out particular regions as well as being used by artists to photograph objects such as homes or the like.

Furthermore aerial viewing devices such as video cameras, or television cameras have also been elevated in an effort to record action shots for television production services as well as being used for search missions in the event when a person has become lost in a forest, wilderness or the like.

Such aerial viewing devices or aerial cameras have been mounted or suspended from airplanes in order to accomplish the desired result. However, such airplanes travel at a relatively fast speed and are subject to the vibrational forces so that it becomes difficult to photograph a suitable picture or to display onto a video camera display unit a suitable image having high resolution qualities.

Various devices have been constructed, and various methods have been employed in order to improve the resolution of images displayed or photographs taken from aerial devices.

For example United States Patent No. 359,902 discloses an aerial photographic apparatus suspended from a balloon.

Moreover United States Patent No. 367,610 discloses apparatus for aerial photography from a high altitude without the necessity of the presence of an operator.

Yet other devices are disclosed by United States Patent No. 510,759 relating to aerial cameras.

United States Patent No. 578,980 shows the use of devices designed to be secured to a kite string to support one or more photographic cameras whereby negatives of the surroundings may be taken at a great altitude.

Furthermore, United States Patent No. 1,528,933 relates to a kite adapted to support an aerial camera.

Finally United States Patent No. 3,638,502 illustrates a stabilized camera mount for compensating erratic movements of vehicles.

These and other prior art devices present relatively complicated structures and are difficult and expensive to use for viewing terrain from an elevated position as well as difficult and expensive to use to photograph terrain from an aerial camera.

It is an object of this invention to provide an improved aerial viewing device and particularly to disclose an improved aerial camera for photographing the desired view or terrain.

JP-A-59149341 discloses an aerial viewing device including:
(a) video camera means;
(b) means for elevating said video camera means relative to ground level;
(c) means suspended from the said elevating means for supporting said camera means, said means comprising camera mounting means and connection means between the camera mounting means and the elevating means;
(d) first drive means for rotating said video camera means to control the image scanned by said video camera means along a first axis;
(e) second drive means for rotating said video camera means to control the image scanned by said video camera means along a second axis;
(f) tether means attached at one end to said elevating means for holding said elevating means and said video camera means in said elevated position, said tether means including electrical conductor means;
(g) electrical control means attached to another end of said tether means for controlling said first and second drive means so as to control the image scanned by said video camera means, and comprising video display means to display the image scanned by the video camera means;
(h) first levelling means depending from said elevating means for allowing rotation of said connection means about a first horizontal axis; and
(i) second levelling means depending from said connecting means for allowing rotation of said camera mounting means about a second horizontal axis.

The invention is characterised thereover in that said first and second levelling means comprise respective first and second arcuate track means along which track means said connecting means and said camera mounting means may respectively move.

The invention also provides a self-levelling device for suspending an aerial camera from and elevating device. JP-A-59149341 discloses such a device. The device of the invention is characterised thereover in that it comprises:
(a) frame means adapted to be attached to said elevating device;
(b) first arcuate track means depending from said frame means;
(c) first housing means comprising first aperture means adapted to receive said first track means for relative slidable movement therebetween;
(d) first nylon slip bearing means pivotally connected to said housing means adjacent each set of aperture means and adapted to receive said first track means for relative slidable movement therebetween so as to allow said first housing means to rotate about a first horizontal axis;
(e) camera mounting means for mounting said aerial camera;
(f) means for connecting said camera mounting means to said first housing means;
(g) second arcuate track means depending from said connecting means;
(h) second nylon slip bearing means pivotally connected to said camera mounting means and adapted to receive slidably said second arcuate track means for relative slidable movement therebetween so as to allow said camera mounting means to rotate about a second horizontal axis.

A preferred embodiment of the invention will now be described, by way of example only with reference to the drawings in which:-
Figure 1 is a side elevational perspective view of said aerial camera;
Figure 2 is a partial cross sectional view of said first motor housing;
Figure 3 is a perspective front elevational view of a motor mounting bracket;
Figure 4 is a perspective view of the connector for connecting the camera mounting to the first motor housing;
Figure 5 is a partial perspective and cut away view of the camera mounting;
Figure 6 is a side elevational view of said second motor housing;
Figure 7 is a side elevational and perspective view of the tether line, shoulder harness, and battery pack;

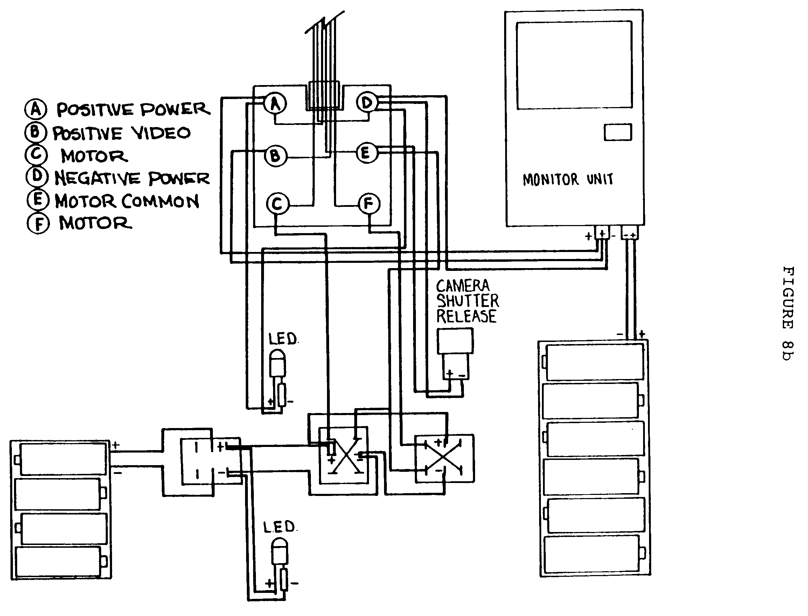

Figures 8a and 8b show the electrical schematic diagram;

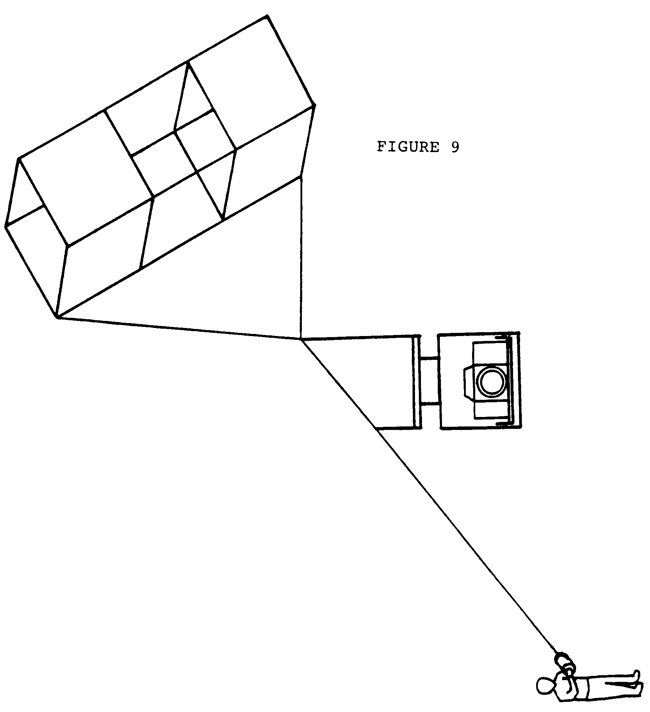

Figure 9 shows the use of the aerial camera with a kite.

Like parts have been given like numbers throughout the figures.

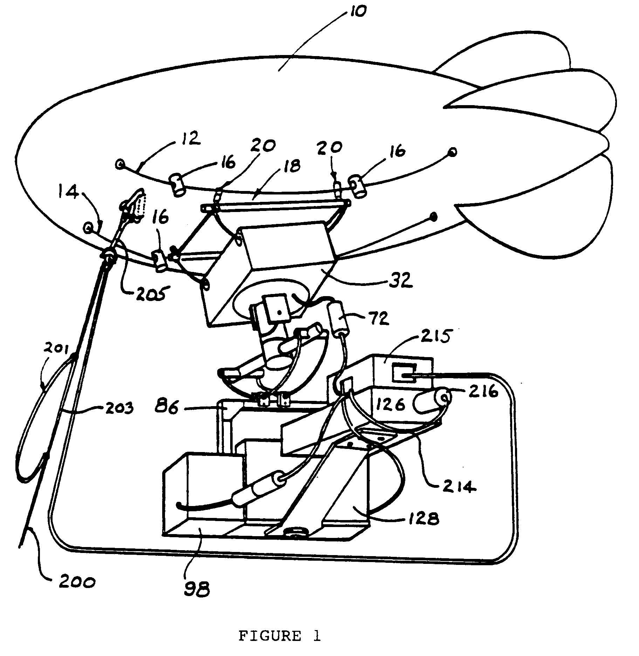

Figure 1 illustrates the aerial camera which includes a helium balloon 10, first housing or first motor housing 32, a camera mounting structure 86, adapted to carry still camera 128, and video camera 126.

The camera mounting 86 also carries second motor housing 98. Furthermore, Figure 1 also illustrates the tether line 200.

More particularly, Figure 1 illustrates the helium balloon 10 has two cords 12 and 14 which run longitudinally along the underside of the helium balloon 10. The ends of cords 12 and 14 respectively are secured to the helium balloon.

Four spring loaded tension anchoring clamps 16 are attached to the cords 12 and 14 and permit the gimbal frame 18 which is connected to cords 12 and 14 by means of wire spring clips 20 so as to freely slidably move along the cords 12 and 14 between tension anchoring clamps 16.

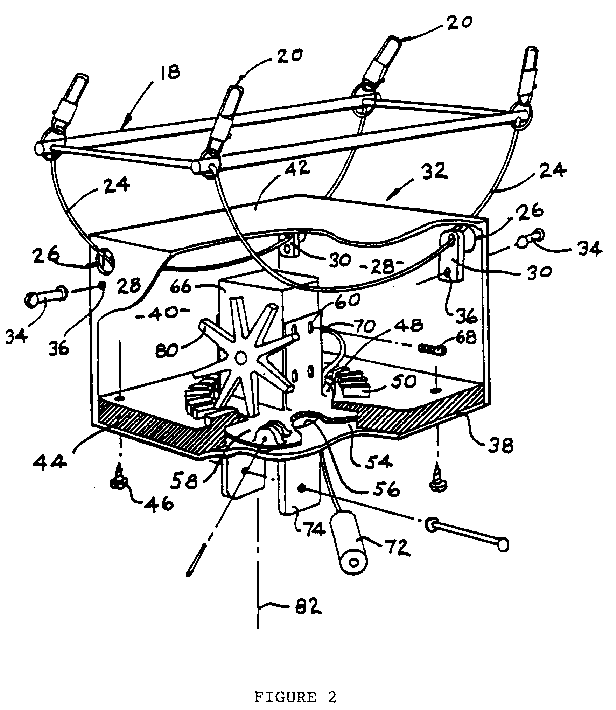

Figure 2 illustrates in more detail the gimbal frame 18 and first motor housing structure 32.

The first motor housing 32 is generally boxed shaped and is suspended from two arched shaped gimbals 24 which pass through openings or apertures 26 presented in the upper outer corners of the end walls 28 of the first motor housing 32.

Furthermore, four first nylon slip bearings 30 are pivotally connected adjacent the apertures 26. The first nylon slip bearings 30 are tabular shaped with an opening in one end which is adapted to receive the arched shaped gimbal wires 24 to pass through easily so as to minimize any snagging of the first pair of gimbal wires 24 with the aperture or first nylon slip bearings 30 and thereby permit the first motor housing to be self-levelled along a first direction.

Furthermore, the first nylon slip bearings 30 include a second hole or aperture 36 located at the opposite end and adapted to receive a bearing pin 34. The bearing pin 34 is adapted to be received in aperture 36 located in the end walls 28 for securement thereto.

Accordingly, the first slip bearings 30 are pivotally secured to said end walls 28. The pivoting action of the first nylon slip bearings 30 minimizes any snagging or braking action which may occur when the first pair of gimbal wires 24 slide relative said first nylon slip bearings 30 particularly when turbulence is encountered while the aerial device is in flight.

The first motor housing 32 is configured as a box and may be constructed of plastic or the like. In particular the first drive motor housing 32 includes an outer floor 38 a pair of end walls 28 and a pair of sidewalls 40 along with a removable top 42. The first motor housing 32 also includes an inner platform 44 which is secured to the floor 38 by means of self-tapping screws 46.

The platform 44 includes a circular opening 48 which is concentrically encircled by a plurality of first gears 50 which are presented by or connected to the upper surface of the platform 44 as best illustrated in figure 2.

Furthermore, a circular recess 54 which is slightly larger in diameter than opening 48, is located in the lower part of platform 44. The floor 38 includes a circular opening 56 which is concentric with hole 48.

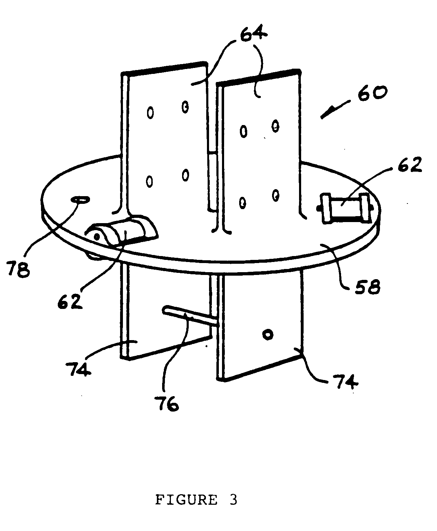

Once the platform 44 is secured to floor 38 by means of self-taping screws 46 the recess 54 presents or defines a circular shaped race. This defined race or recess 54 is adapted to receive the circular base 58 of motor mounting bracket 60 which may be best illustrated in figure 3.

The motor mounting bracket 60 includes three roller bearings 62 which are disposed at equally distant points on the circular base 58 of motor mounting bracket 60.

Two flat wings or legs 64 extend vertically upwardly at right angles from the circular base 58 of the motor mounting bracket 60. The legs 64 are adapted to embrace or cradle the size of the box like first motor 66. The first motor 66 consists of a direct drive motor. The legs 64 are held in place to receptacle 66 by means of screws 68.

Furthermore, the direct current motor receives power by means of two electrical conductor wires 70 which extend through openings 48 and 54. The ends of electrical conductor 70 include a quick connect and disconnect device 72 as best illustrated in figure 2.
A second pair of wings or legs 74 also extend vertically downwardly at right angles from the circular horizontal base 58 as best illustrated in figure 3. The legs 74 are disposed in generally flat parallel relationship and are adapted to receive a horizontally disposed support pin 76 which is permanently held therebetween as best illustrated in figure 3.

The circular base 58 of motor mounting bracket 60 presents a hole 78 which is adapted to receive therethrough electrical conductors 70. The electrical conductors 70 is connected to the direct current drive motor 66 and terminates with a quick connect or disconnect jack 72.

The bearings 62 are adapted to minimize the frictional rotation of the motor mount 60 with the race defined by the recess 54 of platform 44.

The first drive motor 66 is connected to first sprocket 80 as best illustrated in figure 2. First sprocket 80 is adapted for engagement with first gear 50. When the first motor 66 is energized (in a manner which will be more fully described herein) the first motor rotationally drives first sprocket 80 which engages first gear 50 and accordingly the first motor mounting bracket 60 rotates about a first axis 82 which is perpendicular to platform 44. In particular, first axis 82 presents a vertical axis.

It should be noted that first motor 66 contains a series of gears in a gear box (not shown) so as to increase the torque of the device in a manner which is well known to those persons skilled in the art.

The circular opening 56 in platform 44 allows the upper legs 64 which embrace first motor 66, to rotate as well as the lower legs 74. The entire motor mounting bracket 60 is supported by the roller bearings 62 which are held in position by the overlapping section of the platform 44 as well as the engagement of first sprocket 80 with first gears 50.

The lower legs 74 can carry a load and adequately function even if the entire first motor housing 32 is not level with the horizon.

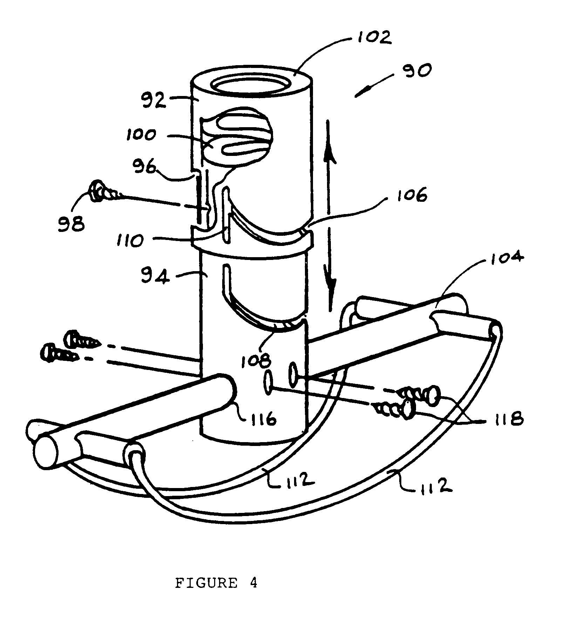

A quick connect and disconnect connector 90 is best illustrated in Figure 4. Connector 90 includes two hollow cylindrical sleeves or tubes 92 and 94. More particularly, upper tube 92 is adapted to telescope over lower tube 94. The upper tube 92 includes a vertical slot 96 through which self-tapping screw 98 is inserted and screwed into the side of lower tube 94.

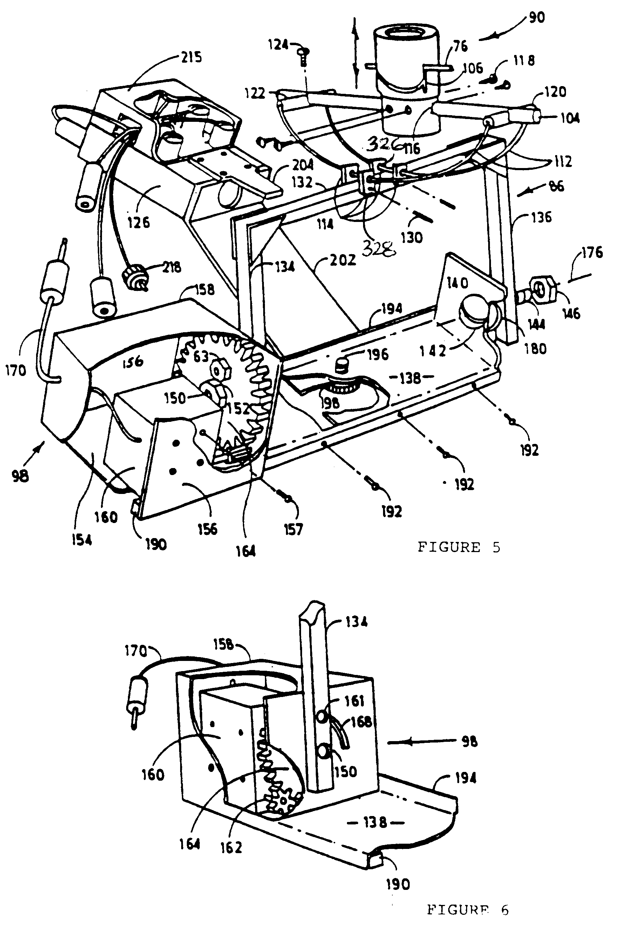

By applying upward pressure to the base of lower tube 94 and holding upper tube 92, upper tube 92 telescopingly slides over tube 94 since tube 94 is slightly smaller in diameter than upper tube 92. A coil spring 100 is located inside hollow tubes 92 and 94 and is adapted to urge said tubes 92 and 94 in a closed or locked position as best illustrated in Figure 5. Figure 4 illustrates the tubes 92 and 94 in an unlocked position.

Upper tube 92 includes a restraining flange 102 so as to prevent said compression spring from escaping. Furthermore, compression spring 100 is held in place relative the lower tube 94 by a suitable restraining flange (not shown).

Upper and lower tubes 92 and 94 include curved slots 106 and 108 respectively.

Accordingly, the user of the aerial camera may connect the connector 90 to the first motor housing 32 by grasping lower tube 94 and compressing compression spring 100 so as to cause the first tube to telescopingly slide over second tube 94 to align slots 106 and 108 which are adapted to receive securing pin 76 of motor mounting bracket 60. First slot 106 also includes a detent slot 110 so that as the pressure of the user is released, upper tube 92 slides upwardly when viewing Figure 5 so as to capture the securing pin 76. The slots 106 and 108 are disposed in an angular direction of approximately 45° to the vertical axis of the tubes 92 and 94.

Lower tube 94 presents a second pair of gimbal wires 112 in a manner to be more fully described herein. Furthermore, the second pair of gimbal wires 112 are connected to camera mounting structure 86 by means of second nylon slip bearings 114 in a manner to be more fully described herein.

Therefore, the connection of the second pair of gimbal wires 112 as well as the camera mounting structure 86 is accomplished by inserting the support pin 76 through slots 106 and 108 of the upper and lower tubes 92 and 94 respectively while tubes 92 and 94 are telescopingly compressed together. The support pin 76 is permitted to travel along the path of the curved slots 106 and 108 until it is located in the end of the slots whereby the pressure may be released from compression spring 100 and the upper tube 92 permitted to travel slightly upwardly relative lower tube 94 so as to capture the pin 76 in detent 110.

Reversing the above procedure allows the removal of the camera mounting structure 86 and second pair of gimbal wires 112 from the first motor housing 32 as well as the first pair of gimbal wires 24. Then the connector 90 is locked onto the support pin 76 the lower levelling gimbal wires 112 are safely suspended and are capable of swinging onto the support pin 76 in a pivoting action.

A plastic or fiberglass rod 104 of smaller diameter than lower or inner telescoping tube 94 runs perpendicularly through holes 116 in the peripheral wall of inner telescoping tube 94 at right angles as best illustrated in Figure 5. Rod 104 may be comprised of plastic or the like and is held in place relative to lower tube 94 by means of screws 118 which pass through the peripheral walls of the inner telescoping tube 94. Rod 104 presents at one end thereof a hollow tube 120 which is smaller in diameter from rod 104 and at the other end thereof a rod 122 which is also smaller in diameter from rod 104. Tube 120 and rod 122 are disposed generally at right angles relative rod 104. Tube 120 may be press fit into rod 104 or secured thereto by means of glue. The smaller diameter rod 122 is secured to rod 70 by means of a screw 124. A wire is fed through tube 120 and bent so as to present a pair of second gimbal wires 112. The other end of gimbal wires 112 are wrapped around rod 122, inserted into the ends of hollow rod 122 or folded back upon themselves to lock in place. Second gimbal wires 112 are arc shaped and are generally disposed parallel to one another.

The second pair of gimbal wires 112 are adapted to be received by second nylon slip bearings 114 in a manner to be described herein. More particularly, second nylon slip bearings 114 present apertures 326 at one end thereof adapted to receive said second pair of gimbal wires 112. Another end of said second nylon slip bearings present an aperture 328 adapted to receive pins 130 which are secured to camera mount structure 86. Second nylon slip bearings are adapted to pivot about pins 130.

Second gimbal wires 112 and second nylon slip bearings 114 define a second self-levelling means; while said first pair of gimbal wires in combination with said first nylon slip bearings 30 define first self-levelling means.

Pins 130 prevent the second nylon slip bearings from binding on the second pair or gimbal wires 112.

Figure 5 also illustrates that camera mounting structure 86 includes an upper frame 132 connected at opposite ends to side frames 134 and 136 respectively. Camera mounting structure 86 also includes lower camera mounting platform 138 which is associated with side frame 134 in a manner to be more fully described herein. The other end of lower camera mounting platform 138 adjacent the side frame 136 terminates in an upwardly projecting portion 140.

Portion 140 is drilled to present an aperture 142 which is adapted to receive a pivot bolt 144 which is also adapted to be received by a suitable aperture (not shown) located in side frame 136. The other end of pivot bolt 144 is adapted to receive nut 146.

Camera mounting structure 86 carries second motor housing structure 98 which is box shaped and comprises floor 154 connected to four sides 156 and a top 158.

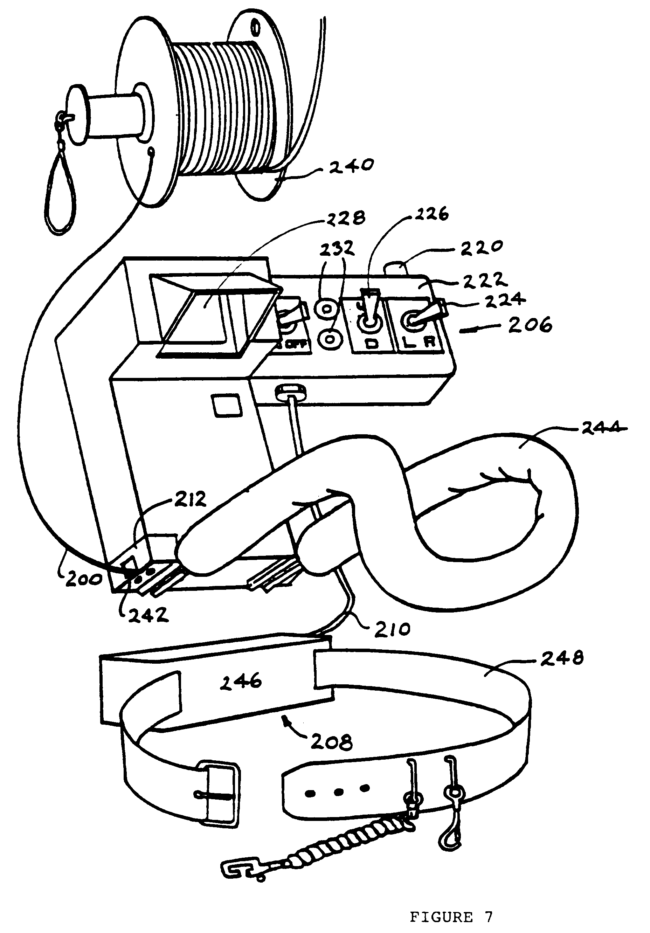

As best illustrated in Figure 6, side frame 134 of camera mounting structure 86 is secured to one side 156 of second motor housing 98 by means of screws 150 which protrudes through one side 156 and second gear wheel 164 and anchored thereto by nut 152. Furthermore a second screw or bolt 161 is received by a hole in side frame 134 and by another hole in gear wheel 164 and secured thereto by nut 63 in a manner so that second motor housing structure can rotate as bolt 161 travels in slot 168.

Second motor housing 98 houses second motor 160, second sprocket 162 and second gear wheel 164.

Second motor 160 is secured to one sidewall 156 by means of screws 157.

Second motor 160 presents an opening to receive two electrical conductors 170.

Second motor 160 is connected to second sprocket 162 which is adapted to engage the teeth located in the perimeter of second gear wheels 164.

When direct current is applied by means of conductors 170 to the second motor drive 160, this causes second gear wheel 164 to rotate and travel about second sprocket 162.

Accordingly, as second motor 160 activates second sprocket 162 thereby causing second sprocket 162 to engage teeth in second gear 164 thereby causing the second motor housing 98 to rotate about a second axis 176 defined by said bolt 144. This causes the lower camera mounting platform 138 to pivot about the second or horizontal axis 176.

Figure 6 illustrates that the lower camera mounting platform 138 is an extension of or connected to floor 154 of second motor drive housing 98.

In other words, when second motor is activated, sprocket 162 rotates second gear wheel 164 and the lower camera mounting platform is displaced in relation to frames 132, 134, and 136. Accordingly, the lower camera mounting platform 138 will either tilt forwardly or backwardly relative to the frames 132, 134, and 136 depending upon the direction of flow of current passing through conductors 170.

The lower camera mounting platform 138 moves without slippage as a result of surface tension supplied by a rubber washer or gasket 180 which is placed concentric with the pivot bolt 142 between portion 140 and side frame 136.

Reinforcing member 190 extends along the bottom lip of lower camera mounting platform 138 which is bent downwardly 90° as well as extending along the underside of floor 154 of second motor drive housing 98 in order to rigidify and strengthen same. Reinforcing member 190 is secured to the lower camera mounting platform 138 and floor 154 by means of screws 192.

The lower camera mounting platform 138 in the preferred embodiment is an extension of wall 156 of second motor drive housing 98 which has been folded outwardly 90°. Alternatively, lower camera mounting platform may be comprised of a separate piece of sheet metal which is suitably attached to second motor drive housing 98.

Furthermore, lower camera mounting platform 138 is folded upwardly to present a rear position ledge 194 for the installation of a still camera 128. The rear position ledge 194 also tends to rigidify and strengthen the lower mounting platform 138.

Lower camera mounting platform 138 presents a circular opening 196 which is adapted to receive camera mounting screw 198 of the type usually found in camera tripods.

Screw 198 extends through opening 196 and through a hole in the foot of the video camera mounting bracket 202 and into the threaded opening located in the base of still camera 128 for the purpose of securing still camera 128, video camera mounting bracket 202 to the lower camera mounting platform 138.

A video camera 126 is secured to the other end of video camera mounting bracket 202 with the lens of the video camera 126 adjacent to or in line with the viewfinder of the still camera 128 so that the image viewed by video camera 126 is substantially the same as the image viewed by the viewfinder of the still camera 128.

The video camera 126 is held in place or secured to the video camera mounting bracket 202 by means of screws or the like.

A video camera positioning tab 204 or device conforming to the configuration of still camera 128 is attached to the surface of the video camera 126 and is orientated so as to allow the forward edge of positioning tab 204 to be inserted into the flash shoe of the still camera 128 or anchor to the camera body. The exact manner of anchoring the video camera to the still camera whether by positioning tab 204 or other fastening tab will depend on the configuration or make of the still camera and video camera.

Accordingly, tab 204 or similar device in combination with the video camera mounting bracket 202 holds or secures the lens of the video camera 126 in alignment with the still camera 128 viewfinder.

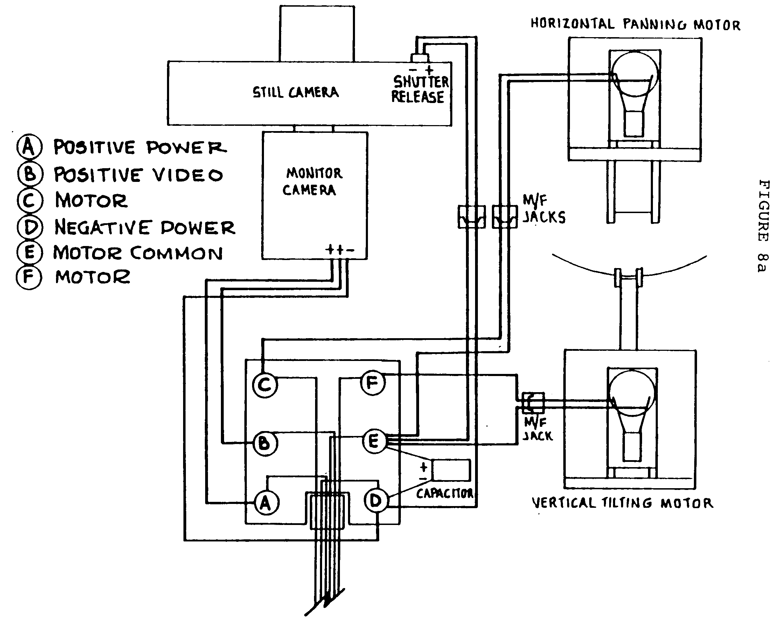

Figure 7 illustrates the tether line 200 shoulder mounted control panel 206 and power pack 208.

Electrical power from the power pack 208 is supplied by means of electrical conductor 210 into electrical junction box 212. Electrical power from electrical junction box 212 is then supplied to the video camera 126 by means of electrical conductor 214 through electrical junction box 215 by means of electrical jack 216.

A still camera electronic shutter release cable 218 is fastened to a suitable terminal in the junction box 215 and is inserted into the appropriate receptacle provided in the still camera 128 for the purpose of activating the shutter.

The shutter of still camera 128 is electrically connected to the control device 206 by means of shutter release cable 218, junction box 215 connected to tether line 200 through junction box 212 into control panel 206 through conductor (not shown) which in turn is activated by a shutter switch 220 located on electrical control panel 222. Accordingly, tether line 200 is an insulated cable carrying six electrical conductors to accomplish the electrical controls as described herein.

Moreover tether line 200 is looped at 201 as seen in Figure 1 with the ends of the loop fastened to an elastic number 203 which acts as a shock absorber in turbulent conditions so as to assist in the stabilization of the device. Furthermore, tether 200 is tied to a clip 205.

Electrical current from the power source 208 is carried through a ground conductor and a power conductor to the direct current drive motor 66 located in the first motor housing 32 by means of cable 70 and is activated by a double throw, double pole switch 224 located on the control panel 222 so as to control the scanning of the video camera 126 and still camera 128 from left to right; or in other words, to cause the camera mount 86 to rotate about vertical axis 82.

Similarly, electrical power may be supplied to the second or horizontal drive motor 160 by means of tether 200, junction box 215 and through electrical conductor 170 so as to activate second or horizontal motor 160 by means of a double throw, double pole switch 226 so as to cause the lower camera mounting platform 138, video camera 126, and still camera 128 to be displaced up or down; in other words, to rotate about a second or horizontal axis 176.

Tether 200 also includes suitable conductors to carry the video signal from video camera 126 to video display 228 located on electrical control panel 222 so as to permit the user to view the view scanned by the video camera 126.

Once the desired view of video camera 126 is displayed on video display 228, the shutter in the still camera 128 may be controlled by means of shutter switch 220 located on control panel 222.

Suitable light emitting diodes 232 are located in the operator's control panel 222 to indicate the presence or absence of electrical power in the system as the appropriate motors are in operation.

Sufficient tether line 200 is wound on a tether line spool 240 so as to allow the flying helium balloon 10 to reach desired height or altitude. The altitude of helium balloon is restricted only by the distance over which the video signal may be transmitted. Tether line 200 also serves to hold the helium balloon at the desired altitude. The operator's control panel 222 is electrically connected to the tether cable 200 by means of a six electrical conductor quick release jack 242. The other end of tether line 200 is connected to junction box 215 by means of a six conductor quick release jack.

The control device 206 includes shoulder mounts 244 which is adapted to be inserted over the head of the user so that the user may easily manipulate the aerial camera.

Furthermore, power system 208 includes a battery pack 246 which is secured to a belt 248 which is worn around the waist of the user. Alternatively, the electrical power pack 246 may be incorporated as a rechargeable battery into electrical control device 206.

The aerial camera is lightweight which makes it possible for the user to move about freely while wearing the shoulder harness 244 and belt 248 incorporating the power pack 246.

The apparatus as disclosed herein permits the operator to see the image in the video display 228 which corresponds to the image seen by the viewfinder of the still camera 128 and to release the shutter of the still camera 128 at the precise moment when the picture is composed to the satisfaction of the viewer.

The equipment as disclosed herein may be used in order to easily, quickly and inexpensively obtain aerial photographs or may be used for aerial observation as in the case of military manoeuvres for security measures or in training exercises.

Furthermore, the equipment as disclosed herein may be used in searches for missing persons and for recording whatever image is captured by a television monitor or video camera for a permanent record. Moreover, at the operator's discretion, still pictures of particularly good quality can be obtained at any time during the process for study at a later date.

Also the use of infra red film in the still camera may provide valuable information indicating the presence of bodies whose temperature may vary from surroundings and show up on such film. Accordingly, it is possible to use pictures taken by using infra red film to study crops and for the study of insulation or heat loss in buildings.

However, the device as described herein has been described in order to secure good quality photographs from a vantage point above the subject for whatever purposes the operator desires. The economy of the operation of the device as disclosed herein is advantageous over obtaining pictures from an airplane which necessitates the burning of fuel.

It should be noted that one filling of the helium balloon 10 will last a considerable length of time restricted only by the condition of the balloon or blimp and requiring only infrequent topping or replacement of gas lost through leakage. While the battery life of the power pack 246 is also sufficient so as to provide savings over conventional methods of obtaining aerial views. The equipment may also be used for recreational or hobby uses or in the artistic field.

The still camera 128 can be controlled to point in any direction selected by the operator as described above, while the self-levelling features as described herein dampens any uncontrolled pitch or yaw of the lower camera mounting platform 138 so as to allow the still camera 128 to maintain a relatively stable horizontal position relative to the helium balloon 10 and to horizon. Furthermore, the self-levelling feature of the apparatus as described herein substantially reduces the movement of the lower camera mounting platform 138 which could occur as a result of the helium balloon pitching, yawing or rotating on its horizontal axis. The self-levelling feature depends on gravity rather than motors or gyroscopes to achieve the desired results with minimum weight and substantial savings in cost of production and ease of use.

Also, the camera mounting 86 can be moved and located anywhere along the cords 12 and 14 as described above which run laterally beneath the helium balloon 10 so that the centre of gravity of the helium balloon 10 can be altered by the weight of the still camera 128, video camera 126, tether line 200 and the first and second levelling devices. This is important in achieving stable flight of the helium balloon under a variety of weather conditions.

Moreover, the device as described herein may be quickly assembled and disassembled and is easily transported while inflated in a suitable truck, van or trailer. When deflated the entire apparatus is easily transported, even on board an aircraft.

## Claims

1. An aerial viewing device including:
(a) video camera means (126);
(b) means (10) for elevating said video camera means relative to ground level;
(c) means suspended from the said elevating means for supporting said camera means, said means comprising camera mounting means (86) and connection means (32,90) between the camera mounting means (86) and the elevating means (10);
(d) first drive means (66) for rotating said video camera means to control the image scanned by said video camera means along a first axis;
(e) second drive means (160) for rotating said video camera means to control the image scanned by said video camera means along a second axis;
(f) tether means (200) attached at one end to said elevating means for holding said elevating means and said video camera means in said elevated position, said tether means including electrical conductor means;
(g) electrical control means (206) attached to another end of said tether means for controlling said first and second drive means so as to control the image scanned by said video camera means, and comprising video display means (228) to display the image scanned by the video camera means;
(h) first levelling means (24) depending from said elevating means for allowing rotation of said connection means about a first horizontal axis; and
(i) second levelling means (112) depending from said connecting means for allowing rotation of said camera mounting means about a second horizontal axis;
characterised in that said first and second levelling means comprise respective first and second arcuate track means (24,112) along which track means said connecting means (32,90) and said camera mounting means (86) may respectively move.

2. An aerial viewing device as claimed in claim 1 wherein said first and second track means comprise respective first and second arcuate wires (24,112).

3. An aerial viewing device as claimed in claim 1 or 2 wherein said second arcuate track means (112) are suspended from said first arcuate wires (24) through said connection means so as to be displaceable relative thereto.

4. An aerial viewing device as claimed in claim 1, 2 or 3 wherein said first arcuate track means (24) depend from a frame means (18) attached to said elevating means (10).

5. An aerial viewing device as claimed in claim 4 including means for connecting and disconnecting said camera mounting means (86) from said frame means (18).

6. An aerial viewing device as claimed in any preceding claim wherein said first arcuate track means (24) are received in aperture means (26) presented by a housing (32) for said first drive means (66).

7. An aerial viewing device as claimed in claim 6 wherein said housing means (32) includes first bearing means (30) pivotally connected to said housing means adjacent each said aperture means (26), to receive said first arcuate track means for relative slidable movement therebetween, for levelling said housing means (32) in a first horizontal position.

8. An aerial viewing device as claimed in claims 6 or 7 wherein said second arcuate track means (112) depend from said housing means (32); and comprising second bearing means (114) connected to said camera mounting means (86) to receive said second arcuate track means for slidable relative movement therebetween, for levelling said mounting means (86) in a second horizontal position.

9. An aerial viewing device as claimed in claim 7 or 8 wherein said first and/or second bearing means (30,114) are nylon slip bearings.

10. An aerial viewing device as claimed in any preceding claim wherein said first drive means includes:
(a) first electrical motor means (60);
(b) first sprocket means (80) driven by said first electrical motor means; and
(c) first gear means (50) engageable with said first sprocket means so as to rotate said camera mounting means about a vertical axis when said sprocket means is activated by said first electrical motor means.

11. An aerial viewing device as claimed in any preceding claim wherein said second drive means includes:
(a) second electrical motor means (160);
(b) second sprocket means (162) driven by said second electrical motor means:
(c) second gear means (164) engageable with said second sprocket means so as to rotate said video camera means about a horizontal axis when said second sprocket means is activated by said second electrical motor means.

12. An aerial viewing device as claimed in any preceding claim wherein said aerial viewing device further includes a still camera means (128) mounted by said camera mounting means (86) which may be activated by said electrical control means, which further comprises shutter activating means for activating said still camera means when said video display means displays a desired view from said video camera means (126).

13. An aerial viewing device as claimed in claim 12 wherein said still camera means (128) photographs substantially the same view scanned by said video camera means (126).

14. An aerial viewing device as claimed in claim 12 or 13 wherein said control means (206) includes means for activating said first drive means (66) so as to rotate said camera mounting means (86), video camera means (126) and said still camera means (128) about a vertical axis.

15. An aerial viewing device as claimed in claim 12, 13 or 14, wherein said electrical control means (206) includes means for rotating said camera mounting means (86), said video camera means (126), and said still camera means (128) about a horizontal axis.

16. An aerial viewing device as claimed in any preceding claim wherein said elevating means comprises a kite.

17. An aerial viewing device as claimed in any of claims 1 to 15 wherein said elevating means comprises helium balloon means (10).

18. An aerial viewing device as claimed in any preceding claim wherein said video camera means (126) comprises video infrared camera means for viewing objects in the dark.

19. An aerial viewing device as claimed in claim 17 or 18 wherein said camera means is suspended from said balloon by cords (12,14).

20. An aerial viewing device as claimed in any preceding claim wherein said electrical control means is carried by a shoulder harness (244).

21. An aerial camera self-levelling device for suspending an aerial camera (126) from an elevating device (10), said aerial camera self-levelling device including:
(a) frame means (18) adapted to be attached to said elevating device (10);
(b) first arcuate track means (24) depending from said frame means (18);
(c) first housing means (32) comprising first aperture means (26) adapted to receive said first track means (24) for relative slidable movement therebetween;
(d) first nylon slip bearing means (30) pivotally connected to said housing means (32) adjacent each set of aperture means and adapted to receive said first track means (24) for relative slidable movement therebetween so as to allow said first housing means (32) to rotate about a first horizontal axis;
(e) camera mounting means (86) for mounting said aerial camera;
(f) means (90) for connecting said camera mounting means (80) to said first housing means (32);
(g) second arcuate track means (112) depending from said connecting means;
(h) second nylon slip bearing means (114) pivotally connected to said camera mounting means and adapted to receive slidably said second arcuate track means (112) for relative slidable movement therebetween so as to allow said camera mounting means to rotate about a second horizontal axis.

## Patentansprüche

1. Vorrichtung zum Anfertigung einer Luftaufnahme umfassend
(a) eine Videokameraeinrichtung (126);
(b) eine Einrichtung (10) zum Anheben der Videokameraeinrichtung relativ zur Bodenhöhe;
(c) eine Einrichtung, die von der Anhebeeinrichtung zum Tragen der Kameraeinrichtung herabhängt, eine Kameramontageeinrichtung (86) und eine Verbindungseinrichtung (32, 90) zwischen der Kameramontageeinrichtung (86) und der Anhebeeinrichtung (10) aufweist;
(d) eine erste Antriebseinrichtung (66), die die Videokameraeinrichtung längs einer ersten Achse dreht, um das Bild, das von der Videokameraeinrichtung aufgenommen wird, zu steuern;
(e) eine zweite Antriebseinrichtung (160), die die Videokameraeinrichtung längs einer zweiten Achse dreht, um das Bild, das von der Videokameraeinrichtung aufgenommen wird, zu steuern;
(f) eine Festbindeeinrichtung (200), die an einem Ende an der Anhebeeinrichtung befestigt ist, um diese und die Videokameraeinrichtung in der angehobenen Stellung zu halten, und die mit einer elektrischen Leitereinrichtung versehen ist;
(g) eine elektrische Steuereinrichtung (206), die am anderen Ende der Festbindeeinrichtung befestigt ist, um die erste und die zweite Antriebseinrichtung und dadurch das von der Videokameraeinrichtung aufgenommene Bild zu steuern, und die mit einer Videoanzeigeeinrichtung (228) versehen ist, die das von der Videokameraeinrichtung aufgenommene Bild anzeigt;
(h) eine erste Nivellierungseinrichtung (24), die von der Anhebeeinrichtung herabhängt, um eine Drehung der Verbindungseinrichtung um eine erste horizontale Achse zu ermöglichen; und
(i) eine zweite Nivellierungseinrichtung (112), die von der Verbindungseinrichtung herabhängt, um eine Drehung der Kameramontageeinrichtung um eine zweite horizontale Achse zu ermöglichen;
**dadurch gekennzeichnet,**
daß die erste und die zweite Nivellierungseinrichtung jeweils eine erste und eine zweite bogenförmige Bahneinrichtung (24,112) enthalten, an der die Verbindungseinrichtung (32,90) bzw. die Kameramontageeinrichtung (86) sich entlangbewegen können.

2. Vorrichtung zum Anfertigen einer Luftaufnahme nach Anspruch 1, wobei die erste und die zweite Bahneinrichtung jeweils mit einem ersten und einem zweiten bogenförmigen Draht (24,112) versehen ist.

3. Vorrichtung zum Anfertigen einer Luftaufnahme nach Anspruch 1 oder 2, wobei die zweite bogenförmige Bahneinrichtung (112) von den ersten bogenförmigen Drähten (24) durch die Verbindungseinrichtung herabhängt, so daß sie relativ zu dieser verschiebbar ist.

4. Vorrichtung zum Anfertigen einer Luftaufnahme nach Anspruch 1, 2 oder 3, wobei die erste bogenförmige Bahneinrichtung (24) von einer Rahmeneinrichtung (18) herabhängt, die an der Anhebeeinrichtung (10) befestigt ist.

5. Vorrichtung zum Anfertigen einer Luftaufnahme nach Anspruch 4, umfassend eine Einrichtung, die die Kameramontageeinrichtung (86) mit der Rahmeneinrichtung (18) verbindet bzw. von der Rahmeneinrichtung (18) löst.

6. Vorrichtung zum Anfertigen einer Luftaufnahme nach einem der vorhergehenden Ansprüche, wobei die erste bogenförmige Bahneinrichtung (24) in einer in einem Gehäuse (32) für die erste Antriebseinrichtung (66) ausgebildeten Öffnungseinrichtung (26) aufgenommen ist.

7. Vorrichtung zum Anfertigen einer Luftaufnahme nach Anspruch 6, wobei die Gehäuseeinrichtung (32) eine erste an der Gehäuseeinrichtung schwenkbar befestigte Lagereinrichtung (30) neben jeder Öffnungseinrichtung (26) umfaßt, um die erste bogenförmige Bahneinrichtung aufzunehmen, damit diese aneinander vorbeigleiten können, so daß die Gehäuseeinrichtung (32) in eine erste horizontale Stellung nivelliert werden kann.

8. Vorrichtung zum Anfertigen einer Luftaufnahme nach Anspruch 6 oder 7, wobei die zweite bogenförmige Bahneinrichtung (112) von der Gehäuseeinrichtung (32) herabhängt, umfassend eine zweite mit der Kameramontageeinrichtung (86) verbundene Lagereinrichtung (114), um die zweite bogenförmige Bahneinrichtung aufzunehmen, damit diese aneinander vorbeigleiten können, so daß die Montageeinrichtung (86) in eine zweite horizontale Stellung nivelliert werden kann.

9. Vorrichtung zum Anfertigen einer Luftaufnahme nach Anspruch 7 oder 8, wobei die erste und/oder die zweite Lagereinrichtung (30,114) Nylongleitlager sind.

10. Vorrichtung zum Anfertigen einer Luftaufname nach einem der vorhergehenden Ansprüche, wobei die erste Antriebseinrichtung folgendes umfaßt:
(a) eine erste Elektromotoreinrichtung (60);
(b) eine erste von der ersten Elektromotoreinrichtung angetriebene Zahnradeinrichtung (80); und
(c) eine erste Zahnkranzeinrichtung (50), die mit der ersten Zahnradeinrichtung in Eingriff bringbar ist, so daß die Kameramontageeinrichtung um eine Vertikalachse gedreht wird, wenn die Zahnradeinrichtung von der ersten Elektromotoreinrichtung in Betrieb gesetzt wird.

11. Vorrichtung zum Anfertigen einer Luftaufnahme nach einem der vorhergehenden Ansprüche, wobei die zweite Antriebseinrichtung umfaßt:
(a) eine zweite Elektromotoreinrichtung (160);
(b) eine zweite von der zweiten Elektromotoreinrichtung angetriebene Zahnradeinrichtung (162); und
(c) eine zweite Zahnradeinrichtung (164), die mit der zweiten Zahnradeinrichtung in Eingriff bringbar ist, so daß sie die Videokameraeinrichtung um eine Horizontalachse dreht, wenn die zweite Zahnradeinrichtung von der zweiten Elektromotoreinrichtung in Betrieb gesetzt wird.

12. Vorrichtung zum Anfertigen einer Luftaufnahme nach einem der vorhergehenden Ansprüche, wobei diese ferner eine durch die Kameramontageeinrichtung (86) getragene Standbildkameraeinrichtung (128) umfaßt, die über die elektrische Steuereinrichtung in Betrieb gesetzt wird, die ferner eine Verschlußinbetriebsetzungseinrichtung enthält, um die Standbildkameraeinrichtung dann in Betrieb zu setzen, wenn die Videoanzeigeeinrichtung ein gewünschtes Bild an der Videokameraeinrichtung (126) anzeigt.

13. Vorrichtung zum Anfertigen einer Luftaufnahme nach Anspruch 12, wobei die Standbildkameraeinrichtung (128) im wesentlichen das gleiche Bild photographiert, das von der Videokameraeinrichtung (126) aufgenommen wird.

14. Vorrichtung zum Anfertigen einer Luftaufnahme nach Anspruch 12 oder 13, wobei die Steuereinrichtung (206) eine Einrichtung zum in-Betrieb-setzen der ersten Antriebseinrichtung (66) umfaßt, um die Kameramontageeinrichtung (86), die Videokameraeinrichtung (126) und die Standbildkameraeinrichtung (128) um eine Vertikalachse drehen zu lassen.

15. Vorrichtung für eine Luftaufnahme nach Anspruch 12, 13 oder 14, wobei die elektrische Steuereinrichtung (206) mit einer Einrichtung zum Drehen der Kameramontageeinrichtung (86), der Videokameraeinrichtung (126) und der Standbildkameraeinrichtung (128) um eine Horizontalachse versehen ist.

16. Vorrichtung zum Anfertigen einer Luftaufnahme nach einer der vorhergehenden Ansprüche, wobei die Anhebeeinrichtung mit einem Luftdrachen versehen ist.

17. Vorrichtung zum Anfertigen einer Luftaufnahme nach einer der Ansprüche 1-15, wobei die Anhebeeinrichtung mit einer Heliumballoneinrichtung (10) versehen ist.

18. Vorrichtung zum Anfertigen einer Luftaufnahme nach einer der vorhergehenden Ansprüche, wobei die Videokameraeinrichtung (126) mit einer Videoinfrarotkameraeinrichtung zum Betrachten von Gegenständen im Dunkeln versehen ist.

19. Vorrichtung zum Anfertigen einer Luftaufnahme nach Anspruch 17 oder 18, wobei die Kameraeinrichtung von dem Ballon durch Seile (12,14) herabhängt.

20. Vorrichtung zum Anfertigen einer Luftaufnahme nach einer der vorhergehenden Ansprüche, wobei die elektrische Steuereinrichtung von einer Schulterträgereinrichtung (244) getragen wird.

21. Vorrichtung zum Selbstnivellierung einer Luftaufnahmekamera, um die Luftaufnahmekamera (126) von einer Anhebevorrichtung (10) herabhängen zu lassen, wobei die Vorrichtung zum Selbstnivellierung der Luftaufnahmekamera folgendes umfaßt;
(a) eine Rahmeneinrichtung (18), die so ausgebildet ist, daß sie an der Anhebeeinrichtung (10) befestigt werden kann.
(b) eine erste bogenförmige Bahneinrichtung (24), die von der Rahmeneinrichtung (18) herabhängt;
(c) eine erste Gehäuseeinrichtung (32), die mit einer ersten zum Aufnehmen der ersten Bahneinrichtung (24) ausgebildeten Öffnungseinrichtung (26) für eine relative Gleitbewegung dazwischen versehen ist;
(d) eine erste Nylongleitlagereinrichtung (30) die mit der Gehäuseeinrichtung (32) neben jedem Satz Öffnungseinrichtungen schwenkbar verbunden ist und die ausgebildet ist, damit sie die erste Bahneinrichtung (24) aufnimmt, für eine relative Gleitbewegung dazwischen, um ein Drehen der ersten Gehäuseeinrichtung (32) um eine erste Horizontalachse zu ermöglichen;
(e) eine Kameramontageeinrichtung (86) zum Montieren der Luftaufnahmekamera;
(f) eine Einrichtung (90) zum Verbinden der Kameramontageeinrichtung (80) an der ersten Gehäuseeinrichtung (32);
(g) eine zweite bogenförmige Bahneinrichtung (112), die von der Verbindungseinrichtung herabhängt;
(h) eine zweite Nylongleitlagereinrichtung (114), die mit der Kameramontageeinrichtung schwenkbar verbunden ist und die ausgebildet ist, um die zweite bogenförmige Bahneinrichtung (112) gleitbar aufzunehmen, um eine relative Gleitbewegung dazwischen zu ermöglichen, damit die Kameramontageeinrichtung um eine zweite Horizontalachse drehen kann.

## Revendications

1. Dispositif d'observation aérienne comprenant :
(a) des moyens formant caméra vidéo (126);
(b) des moyens (10) d'élévation desdits moyens formant caméra vidéo par rapport au niveau du sol;
(c) des moyens suspendus auxdits moyens d'élévation pour supporter lesdits moyens formant caméra, lesdits moyens comprenant des moyens (86) de montage de la caméra et des moyens de raccordement (32,90) situés entre les moyens (86) de montage de la caméra et les moyens d'élévation (10);
(d) des premiers moyens d'entraînement (66) pour faire tourner lesdits moyens formant caméra vidéo de manière à commander l'image balayée par lesdits moyens formant caméra vidéo le long d'un premier axe;
(e) des seconds moyens d'entraînement (160) pour faire tourner lesdits moyens formant caméra vidéo pour commander l'image balayée par lesdits moyens formant caméra vidéo le long d'un second axe;
(f) des moyens d'arrimage (200), fixés par une extrémité auxdits moyens d'élévation pour maintenir lesdits moyens d'élévation et lesdits moyens formant caméra vidéo dans ladite position élevée, lesdits moyens d'arrimage comprenant des moyens formant conducteurs électriques;
(g) des moyens de commande électrique (206) fixés à une autre extrémité desdits moyens d'arrimage pour commander lesdits premiers et seconds moyens d'entraînement afin de commander l'image balayée par lesdits moyens formant caméra vidéo, et comprenant des moyens d'affichage vidéo (228) pour afficher l'image balayée par les moyens formant caméra vidéo;
(h) des premiers moyens de réglage de niveau (24) qui s'étendent vers le bas à partir desdits moyens d'élévation pour permettre une rotation desdits moyens de raccordement autour d'un premier axe horizontal; et
(i) des seconds moyens de réglage de niveau (112) qui s'étendent vers le bas à partir desdits moyens de raccordement pour permettre une rotation desdits moyens de montage de la caméra autour d'un second axe horizontal;
caractérisé en ce que lesdits premiers et seconds moyens de réglage de niveau comprennent des premiers et seconds moyens en forme de pistes courbes (24,112), le long desquels lesdits moyens de raccordement (32,90) et lesdits moyens (86) de montage de la caméra peuvent respectivement se déplacer.

2. Dispositif d'observation aérienne selon la revendication 1, dans lequel lesdits premiers et seconds moyens formant pistes comprennent des premier et second fils courbes (24,112).

3. Dispositif d'observation aérienne selon la revendication 1 ou 2, dans lequel lesdits seconds moyens formant pistes courbes (112) sont suspendus à partir desdits premiers fils courbes (24) par l'intermédiaire desdits moyens de raccordement, de manière à être déplaçables par rapport à ces fils.

4. Dispositif d'observation aérienne selon la revendication 1, 2 ou 3, dans lequel lesdits premiers moyens formant pistes courbes (24) s'étendent vers le bas à partir de moyens formant cadre (18) fixés auxdits moyens d'élévation (10).

5. Dispositif d'observation aérienne selon la revendication 4, comprenant des moyens pour connecter et déconnecter lesdits moyens (86) de montage de la caméra, à partir desdits moyens formant cadre (18).

6. Dispositif d'observation aérienne selon l'une quelconque des revendications précédentes, dans lequel lesdits premiers moyens formant pistes courbes (24) sont logés dans des moyens en forme d'ouvertures (26) que comporte un boîtier (32) pour lesdits premiers moyens d'entraînement (66).

7. Dispositif d'observation aérienne selon la revendication 6, dans lequel lesdits moyens formant boîtier (32) comprennent des premiers moyens formant paliers (30) raccordés de manière à pouvoir pivoter auxdits moyens formant boîtier dans une position adjacente à chacun desdits moyens en forme d'ouvertures (26), pour recevoir lesdits premiers moyens formant piste courbe pour un déplacement de glissement relatif entre ces moyens, pour régler le niveau desdits moyens formant boîtier (32) dans une première position horizontale.

8. Dispositif d'observation aérienne selon la revendication 6 ou 7, dans lequel lesdits seconds moyens formant pistes courbes (112) s'étendent vers le bas à partir desdits moyens formant boîtier (32); et comprenant des seconds moyens formant paliers (114) raccordés auxdits moyens (86) de montage de la caméra pour recevoir lesdits seconds moyens formant pistes courbes de manière à permettre un déplacement relatif de glissement entre ces moyens, pour le réglage de niveau desdits moyens de montage (86) dans une seconde position horizontale.

9. Dispositif d'observation aérienne selon la revendication 7 ou 8, dans lequel lesdits premiers et/ou seconds moyens formant paliers (30,114) sont des paliers de glissement en nylon.

10. Dispositif d'observation aérienne selon l'une quelconque des revendications précédentes, dans lequel lesdits premiers moyens d'entraînement comprennent :
(a) des premiers moyens formant moteur électrique (60);
(b) des premiers moyens formant roue dentée (80) entraînés par lesdits premiers moyens formant moteur électrique; et
(c) des premiers moyens formant pignon (50) aptes à s'engrener avec lesdits premiers moyens formant roue dentée de manière à faire tourner lesdits moyens de montage de la caméra autour d'un axe vertical lorsque lesdits moyens formant roue dentée sont activés par lesdits premiers moyens formant moteur électrique.

11. Dispositif d'observation aérienne selon l'une quelconque des revendications précédentes, dans lequel lesdits seconds moyens d'entraînement comprennent :
(a) des seconds moyens formant moteur électrique (160);
(b) des seconds moyens formant roue dentée (162) entraînés par lesdits seconds moyens formant moteur;
(c) des seconds moyens formant pignon (164) aptes à engrener avec lesdits seconds moyens formant roue dentée de manière à faire tourner lesdits moyens formant caméra vidéo autour d'un axe horizontal lorsque lesdits seconds moyens formant roue dentée sont activés par lesdits seconds moyens formant moteur électrique.

12. Dispositif d'observation aérienne selon l'une quelconque des revendications précédentes, dans lequel ledit dispositif d'observation aérienne comprend en outre des moyens formant appareil de prise de vues fixes (128) supportés par lesdits moyens (86) de montage de la caméra, qui peuvent être activés par lesdits moyens de commande électrique, qui comprennent en outre des moyens d'activation d'obturateur servant à activer lesdits moyens formant appareil de prise de vues fixes lorsque lesdits moyens d'affichage vidéo affichent une vue désirée délivrée par lesdits moyens formant caméra vidéo (126).

13. Dispositif d'observation aérienne selon la revendication 12, dans lequel lesdits moyens formant appareil de prise de vues fixes (128) photographient essentiellement la même vue balayée par lesdits moyens formant caméra vidéo (126).

14. Dispositif d'observation aérienne selon la revendication 12 ou 13, dans lequel lesdits moyens de commande (206) comprennent des moyens pour activer lesdits moyens d'entraînement (66) de manière à faire tourner lesdits moyens (86) de montage de la caméra, des moyens formant caméra vidéo (126) et lesdits moyens formant appareil de prise de vues fixes (128) autour d'un axe vertical.

15. Dispositif d'observation aérienne selon la revendication 12, 13 ou 14, dans lequel lesdits moyens de commande électrique (206) comprennent des moyens pour faire tourner lesdits moyens (86) de montage de la caméra, lesdits moyens formant caméra vidéo (126) et lesdits moyens formant appareil de prise de vues fixes (128) autour d'un axe horizontal.

16. Dispositif d'observation aérienne selon l'une quelconque des revendications précédentes, dans lequel lesdits moyens d'élévation comprennent un cerf-volant.

17. Dispositif d'observation aérienne selon les revendications 1 à 15, dans lequel lesdits moyens d'élévation comprennent des moyens en forme de ballon rempli d'hélium (10).

18. Dispositif d'observation aérienne selon l'une quelconque des revendications précédentes, dans lequel lesdits moyens formant caméra vidéo (126) comprennent des moyens formant caméra vidéo à infrarouge pour l'observation d'objets dans le noir.

19. Dispositif d'observation aérienne selon la revendication 17 ou 18, dans lequel lesdits moyens formant caméra sont suspendus par des cordes (12, 14) audit ballon.

20. Dispositif d'observation aérienne selon l'une quelconque des revendications précédentes, dans lequel lesdits moyens de commande électrique sont portés par un harnais (244) porté aux épaules.

21. Dispositif de réglage du niveau d'une caméra aérienne pour la suspension d'une caméra aérienne (126) à un dispositif d'élévation (10), ledit dispositif de réglage du niveau de la caméra aérienne comprenant :
(a) des moyens formant cadre (18) aptes à être fixés audit dispositif d'élévation;
(b) des premiers moyens formant pistes courbes (24) qui s'étendent vers le bas à partir desdits moyens formant cadre (18);
(c) des premiers moyens formant boîtier (32) comprenant des premiers moyens formant ouvertures (26) aptes a recevoir lesdits premiers moyens formant pistes (24) pour permettre un mouvement de glissement relatif entre ces moyens;
(d) des premiers moyens formant paliers à glissement en nylon (30) raccordés de manière à pouvoir pivoter auxdits moyens formant boîtier (32) au voisinage de chaque ensemble de moyens formant ouvertures et aptes à recevoir lesdits premiers moyens formant pistes (24) pour un mouvement de glissement relatif entre ces moyens de manière à permettre auxdits premiers moyens formant boîtier (32) de tourner autour d'un premier axe horizontal;
(e) des moyens (86) de montage d'une caméra pour le montage de ladite caméra aérienne;
(f) des moyens (90) pour raccorder lesdits moyens (83) de montage de la caméra auxdits premiers moyens formant boîtier (32);
(g) des seconds moyens formant pistes courbes (112) qui s'étendent vers le bas à partir desdits moyens de raccordement;
(h) des seconds moyens formant palier à glissement en nylon (114) raccordés de manière à pouvoir pivoter auxdits moyens de montage de la caméra et aptes à recevoir, avec possibilité de glissement, lesdits seconds moyens formant pistes courbes (112) pour permettre un glissement relatif entre ces moyens afin de permettre auxdits moyens de montage de la caméra de tourner autour d'un second axe horizontal.
